# EUROPÄISCHE PATENTSCHRIFT

(11) **EP 4 052 871 B1**
(45) Veröffentlichungstag und Bekanntmachung des Hinweises auf die Patenterteilung: **28.08.2024**
(21) Anmeldenummer: 22159651.3
(22) Anmeldetag: 02.03.2022
(51) Int. Cl.: B26D 3/16, B26D 7/26, B23D 21/06, B26D 5/10

(54) **SCHNEIDGERÄT ZUM ABLÄNGEN VON ROHREN ODER HÜLSEN**
CUTTING DEVICE FOR CUTTING TUBES OR SLEEVES
APPAREIL DE COUPE PERMETTANT DE DÉCOUPER DES TUBES OU DES MANCHONS

(30) Priorität: 05.03.2021 DE 102021105343
(43) Veröffentlichungstag der Anmeldung: 07.09.2022
(60) Teilanmeldung: 24189624.0
(73) Patentinhaber: Knipex-Werk C. Gustav Putsch KG, 42349 Wuppertal (DE)
(72) Erfinder: Liedtke, Tim, 42653 Solingen (DE)
(74) Vertreter: Müller, Enno

(56) Entgegenhaltungen:
- EP-A1- 3 450 070
- EP-A1- 3 744 455
- WO-A1-2018/192887
- DE-A1- 102017 129 725
- DE-A1- 2 849 733
- DE-U1- 202014 101 596
- DE-U1- 29 810 244
- US-A- 5 956 853

## Beschreibung

### Gebiet der Technik

Die Erfindung betrifft ein Schneidgerät zum Ablängen von Rohren nach den Merkmalen des Oberbegriffes des Anspruches 1.

### Stand der Technik

Schneidgeräte der in Rede stehenden Art sind bekannt, insbesondere zum Schneiden von Rohren, weiter insbesondere Kunststoffrohren. Solche Rohre, insbesondere Kunststoffrohre, können beispielsweise im Sanitärbereich als Wasserzulauf-, und/ oder Wasserablaufrohre dienen, darüber hinaus können sie beispielsweise auch bei einer Elektroinstallation zur Anwendung kommen, insbesondere zur schützenden Aufnahme von einem oder mehreren Kabeln. So können auch weiter beispielsweise mittels solcher Schneidgeräte Hochtemperatur-Abwasserrohre oder auch Elektro-Leerrohre geschnitten werden. Auch sind derartige Schneidgerät bekannt, mittels welchen Hülsen, weiter beispielsweise sogenannte Tropfhülsen, abgelängt werden können.

Bekannte Ausführungen solcher Schneidgeräte weisen bevorzugt zwei gelenkig miteinander verbundene Schalenteile auf, welche relativ zueinander um eine in Längserstreckungsrichtung des Schneidgeräts insgesamt ausgerichtete Schwenkachse aus einer Öffnungsstellung in eine Arbeitsstellung und zurück verschwenkbar sind. In diesem Zusammenhang wird beispielsweise auf die gattungsgebende DE 10 2017129 725 A1 oder auch die DE 20 2014 101 596 U1 verwiesen.

Aus der US 4799406 A ist ein Werkzeug zum Abisolieren von Kabeln bekannt, das zwei zueinander verschwenkbare Werkzeugschenkel aufweist, die im geschlossenen Zustand an ihrem äußeren Ende in einen Übergriff zueinander bringbar sind.

### Zusammenfassung der Erfindung

Ausgehend von einem Stand der Technik wie er aus der DE 10 2017129 725 A1 bekannt ist stellt sich die Aufgabe, ein Schneidgerät der genannten Art insbesondere handhabungstechnisch und/ oder ergonomisch verbessert auszugestalten.

Diese Aufgabe ist beim Gegenstand des Anspruches 1 gelöst, wobei darauf abgestellt ist, dass mit Bezug auf die Schwenkachse radial äußere Enden der Schalenteile auf unterschiedlichen Radien bewegbar sind, dass das radial kürzere erste Schalenteil bis in eine Überdeckung zu der zweiten Schalenaufnahme des zweiten Schalenteils bewegbar ist, dass bei vollständig zusammengefahrenen Schalenteilen das radial äußere freie Ende des zweiten Schalenteils in einer Schwenkrichtung frei von einer Überdeckung durch das erste Schalenteil ist und dass eine die zweite Schalenaufnahme bildende Fläche des zweiten Schalenteils von dem radial äußeren Ende des ersten Schalenteils durchsetzbar ist.

Zufolge der vorgeschlagenen Ausgestaltung der das Schneidgerät im Wesentlichen bildenden Schalenteile ergibt sich unter Ermöglichung eines vergleichsweise großen Einsatzbereiches eine ergonomisch günstige Handhabbarkeit des Schneidgeräts. Das Schneidgerät erweist sich in der Arbeitsstellung, darüber hinaus aber auch in einer möglichen Verwahrstellung, als kompakt. Eine einhändige Bedienung des Schneidgeräts im Zuge eines Schneidvorgangs ist zufolge der vorgeschlagenen Geometrie über einen vergleichsweise großen Durchmesserbereich des zu schneidenden Rohres beziehungsweise der zu schneidenden Hülse von beispielsweise 10 mm bis hin zu 80 mm, weiter beispielsweise 20 mm bis 50 mm gegeben.

Das radial äußere Ende des kürzeren ersten Schalenteils kann sich dabei um die geometrische Schwenkachse auf einem Radius bewegen, welcher beispielsweise etwa dem 0,5- bis 0,85-Fachen, weiter etwa dem 0,65- bis 0,75-Fachen des Radius des äußeren Endes des zweiten längeren Schalenteils entsprechen kann. Dabei kann zumindest über einen Schwenkbereich, insbesondere über einen Schwenkbereich, in welchem Rohre oder Hülsen mit vergleichsweise geringem Durchmesser geschnitten werden oder in welchem die Schalenteile aneinander zur Anlage kommen können, das radial kürzere erstes Schalenteil insbesondere im Bereich des freien Endes in eine zumindest abschnittweise Überdeckung in eine bezüglich der Schwenkachse radialen Richtung zu dem zweiten Schalenteil gelangen, wodurch weiter eine kompakte Bauform des Schneidgerätes bei ergonomisch günstiger Ausgestaltung erreicht werden kann.

Die Überdeckung betrachtet in eine Richtung entlang der Schwenkachse in radialer Richtung gegeben. Das kürzere erste Schalenteil kann entsprechend zumindest in einer Schwenkstellung teilweise quasi in das zweite Schalenteil eingeschachtelt werden. Dabei ergibt sich insbesondere in der vollständig zusammengefahrenen Stellung der Schalenteile eine Ineinanderschachtelung, in welcher das freie Ende des längeren zweiten Schalenteils in Verlängerung des Krümmungsverlaufes dieses zweiten Schalenteils nicht von dem ersten Schalenteil oder Abschnitten des ersten Schalenteiles überdeckt ist. Dies betrifft insbesondere eine Stirnfläche des längeren zweiten Schalenteils. Eine Stirnfläche des ersten Schalenteils bewegt sich auf Radien, die innerhalb von Radien der Stirnfläche des zweiten Schalenteils liegen.

Die Schalenteile können außenseitig mehrere beabstandete Rippenausformungen aufweisen, die sich quer zu der Schwenkachse erstrecken.

Hieraus ergibt sich insbesondere eine ergonomisch günstige Gestaltung der Greifflächen des Schneidgeräts. Die in Radialrichtung vorstehenden Rippenausformungen belassen, in Richtung der Schwenkachse betrachtet, zwischen sich bevorzugt rinnenförmige Vertiefungen. Eine solche Vertiefung ist weiter bevorzugt ergonomisch günstig gebildet in Art einer Kehle, in welcher der Finger, bevorzugt beidseitig seitlich geführt durch die Rippenausformung, einliegen kann.

So kann ein Schalenteil außenseitig drei oder mehr, beispielsweise bis hin zu fünf derartige Rippenausformungen aufweisen, welche weiter bevorzugt in Richtung der Schwenkachse gleichmäßig zueinander beabstandet sein können. Entsprechend können sich weiter zwei, drei oder vier kehlartige Vertiefungen ergeben, in welchen bei Benutzung des Schneidgerätes eine entsprechende Anzahl an Fingern einliegen kann.

Derartige Rippenausformungen und die dabei sich ergebende Vertiefungen können handhabungsgünstig, wie auch bevorzugt, außenseitig beider Schalenteile vorgesehen sein.

Das Schneidmesser kann in einem auswechselbaren Messerträger angeordnet sein.

Das Messer kann entsprechend zusammen mit dem Messerträger aus dem Schneidgerät entfernt werden, beispielsweise zum Auswechseln des Schneidmessers allein oder zusammen mit dem Messerträger bei entsprechender Abnutzung. Auch kann das Schneidmesser allein oder zusammen mit dem Messerträger beispielsweise für bestimmte Anwendungen gegen ein alternatives Schneidmesser gewechselt werden.

Darüber hinaus kann zufolge Anordnung des Schneidmessers an einem Messerträger gegebenenfalls auch die Positionierung des Schneidmessers innerhalb des Schneidgeräts, insbesondere innerhalb des das Schneidmesser mit dem Messerträger tragenden Schalenteils verändert werden.

In bevorzugter Ausgestaltung ist dabei das Schneidmesser lösbar an dem Messerträger gehalten. Die diesbezügliche Verbindung kann dabei, wie auch bevorzugt, mit einem üblichen Werkzeug aufgehoben beziehungsweise hergestellt werden. So ist diesbezüglich eine Schraubbefestigung bevorzugt,

Ein Öffnungswinkel einer V-Schalenaufnahme kann zwischen 80 und 100 Grad liegen.

Der vorteilhafte Öffnungswinkel der V-Schenkel der V-Schalenaufnahme bietet eine günstige umfangsmäßige Abstützung des zu schneidenden Rohres beziehungsweise der zu schneidenden Hülse über einen vergleichsweise großen Durchmesser-Bereich, wobei weiter durch V-förmige Anstellung der Aufnahmeränder zugleich eine zentrierte Ausrichtung des zu schneidenden Werkstücks erreichbar ist.

Bevorzugt ist dabei weiter ein diesbezüglicher Öffnungswinkel zwischen etwa 85 und etwa 95 Grad, weiter bevorzugt etwa 90 Grad.

Eine die Schalenaufnahme bildende Fläche des zweiten Schalenteils ist von dem radial äußeren Ende des ersten Schalenteils durchsetzbar. Zufolge einer solchen Durchsetzung kann die vorbeschriebene Überdeckung der Schalenteile erreicht sein. Das erste Schalenteil kann dabei endseitig, d. h. abgewandt der Schwenkachse, mit einem Endbereich die Fläche des zweiten Schalenteils durchsetzen, welcher Endbereich sich beispielsweise etwa über ein Achtel bis ein Viertel, weiter bevorzugt etwa ein Sechstel der quer zur Ausrichtung der Schwenkachse betrachteten Erstreckungslänge des ersten Schalenteils ausgehend von der Schwenkachse erstrecken kann.

Weiter kann sich eine solche Durchsetzung gegebenenfalls über einen Schwenkbereich des ersten Schalenteils relativ zu dem zweiten Schalenteil von etwa 10 bis 20 Grad, weiter etwa 15 Grad ergeben. Dabei kann das erste Schalenteil ausgehend von einer ersten Berührung der Fläche der Schalenaufnahme des zweiten Schalenteils bevorzugt noch um einen Schwenkwinkel von beispielsweise etwa 15 Grad unter bevorzugter Einhaltung der Überdeckung zu dem zweiten Schalenteil in Richtung auf die zusammengefahrene Stellung verschwenken.

Die Fläche der Schalenaufnahme des zweiten Schalenteils kann dabei teilweise als reale Fläche und teilweise als Hüllfläche gebildet sein. Die gedachte Hüllfläche ergibt sich dabei bevorzugt aus einer die realen Flächen in ihrer Flächenerstreckung verbindenden Fläche. Bevorzugt ergibt sich zumindest abschnittweise eine kreisförmige und/oder ebene Hüllfläche. Dabei kann sich die Hüllfläche weiter, insbesondere in Erstreckungsrichtung der Schwenkachse betrachtet, zwischen den realen Flächen ergeben.

Bevorzugt ist die Durchsetzung im Bereich der Hüllfläche erreicht. So ist bevorzugt die Durchsetzung zwischen den Bereichen der realen Flächen der Schalenaufnahme ermöglicht, beispielsweise durch eine schlitzförmige Ausgestaltung der Schalenaufnahme oder durch Bildung von zu durchgreifenden Öffnungen.

Die Stirnflächen von an dem zweiten Schalenteil nach innen, d. h. in Richtung auf das Schneidmaul vorstehenden Rippen können gemäß einer Weiterbildung eine Fläche, so weiter insbesondere die reale Fläche, bilden.

Bezüglich der Rippenausformungen außenseitig auf zumindest einem der Schalenteile kann gemäß einer Weiterbildung vorgesehen sein, dass sich eine Rippenausformung des einen Schalenteils mit Unterbrechung durch die Schwenkachse fluchtend in dem anderen Schalenteil fortsetzt. Eine solche Fortsetzung der Rippenausformungen und somit auch daraus resultierend eine Fortsetzung der beispielsweise kehlartigen Fingerausformungen über den Verbindungsbereich der beiden Schalenteile hinaus erweist sich insbesondere handhabungstechnisch und ergonomisch von Vorteil. Das Schneidgerät ist auch bei einem einhändigen Erfassen desselben über den Verbindungs- beziehungsweise Schwenkbereich hinaus sicher gegriffen.

Hinsichtlich der Anordnung des Schneidmessers kann gemäß einer Weiterbildung des Erfindungsgegenstandes vorgesehen sein, dass der Messerträger wendbar in dem Schalenteil angeordnet ist. Dabei kann weiter der Messerträger in der Anordnungsstellung eine im Wesentlichen in Erstreckungsrichtung der Schwenkachse gerichtete Längserstreckung aufweisen. Der Messerträger kann weiter bevorzugt im Wesentlichen um eine senkrecht zur geometrischen Schwenkachse verlaufende Körperachse gewendet werden, sodass ein Ende des Messerträgers nach dem Wenden um bevorzugt 180 Grad in die entgegengesetzte Richtung wie zuvor weist.

Durch ein Wenden des Messerträgers kann eine Veränderung der Positionierung des Schneidmessers erreicht werden und/ oder eine Veränderung der im Zuge des Schneidvorgangs wirksamen Schneidkante des Schneidmessers. So kann mit Wenden des Messerträgers beispielsweise eine geradlinig verlaufende wirksame Schneidkante gegen eine konkav oder konvex verlaufende wirksame Schneidkante gewechselt werden. Auch kann weiter beispielsweise durch Wenden des Messerträgers die Schneidtiefe des Schneidmessers verändert werden.

Ist durch Wenden des Messerträgers eine Veränderung der Positionierung des Schneidmessers erreichbar, so kann gemäß einer möglichen Ausgestaltung in einer Ausrichtung des Messerträgers bezüglich der Längserstreckung des Schneidgeräts, insbesondere bezüglich der Längserstreckung des den Messerträger tragenden Schalenteils, im Wesentlichen eine mittige Anordnung des Schneidmessers gegeben sein. In der Wendestellung des Messerträgers kann die Positionierung des Schneidmessers dahingehend verändert vorliegen, dass das Schneidmesser bezüglich der Längserstreckung des Schneidgerätes außermittig angeordnet ist. So kann weiter in dieser Messerträger-Ausrichtung das Schneidmesser beispielsweise randnah des den Messerträger halternden Schalenteils positioniert sein, weiter beispielsweise zur Nutzung des Schneidgerätes zur Ablängung sogenannter Tropfhülsen.

Zum Auswechseln des Messerträgers kann der Messerträger gemäß einer möglichen Ausgestaltung in Richtung der Schwenkachse beweglich in dem Schalenteil angeordnet sein. Diesbezüglich kann sich eine Verschiebbarkeit, gegebenenfalls, wie auch bevorzugt, nach Aufhebung einer den Messerträger in dem Schalenteil fixierenden Ausbildung, innerhalb des Schalenteils ergeben. Hierzu kann weiter gegebenenfalls eine die Schiebeverlagerbarkeit ermöglichende Führung gegeben sein, beispielsweise in Art einer schienenartigen Führung.

So können weiter für den Messerträger mehrere Führungsaufnahmen vorgesehen sein, die (auch) eine höhenmäßig unterschiedliche Anordnung des Messerträgers in dem Schalenteil ermöglichen können. Entsprechend können sich je nach Anordnung des Messerträgers in der einen oder anderen Führungsaufnahme unterschiedliche Vorstandslagen der Schneidkante über die Fläche der Schneidaufnahme hinaus in Richtung auf das Schneidmaul ergeben. Bevorzugt sind in diesem Zusammenhang zwei Führungsaufnahmen vorgesehen, zur unterschiedlichen Anordnung des Messerträgers in zwei unterschiedlichen Höhen. Auch können mehr als zwei, beispielsweise drei oder vier, solcher Führungsaufnahmen in dem Schalenteil ausgebildet sein.

Der Messerträger kann in dem Schalenteil beispielsweise mittels einer Schraube festsetzbar sein. Unter Nutzung beispielsweise einer solchen Schraube ist der Messerträger bevorzugt in beiden Wendestellungen in dem Schalenteil fixierbar. Die Führungsaufnahmen wirken dabei weiter bevorzugt drehhindernd.

Eine Aufnahme für die Schraube in dem Messerträger, wie auch die mit der Schraube zusammenwirkende Aufnahme in dem Schalenteil, erstreckt sich bevorzugt quer zu einer Verschieberichtung des Messerträgers. Die Verschieberichtung ist dabei weiter bevorzugt gleichgerichtet zur Erstreckungsrichtung der Schwenkachse.

In weiterer Ausgestaltung kann mit Ausnahme des Schneidmessers die Schalenaufnahme des Weiteren (ersten) Schalenteils kreisabschnittsförmig gebildet sein. Das Schalenteil ist somit als eine Kreisabschnittsform gebildet. Mit Bezug auf eine Projektion der Anlagefläche der Schalenaufnahme in eine quer zur Schwenkachse ausgerichtete Ebene kann sich eine Kreislinienform mit gleichbleibendem Radius oder auch eine zusammengesetzte Kreislinienform mit unterschiedlichen Radien ergeben. Weiter ergibt sich diese Kreisabschnittsform des Schalenteils insbesondere in der quer zur Schwenkachse sich ergebenden Schnittebene.

Diese Kreisabschnittsform kann durch das gegenüber der Schalenaufnahme vorstehende Schneidmesser unterbrochen sein. Entsprechend ergibt sich in dem Bereich des Schneidmauls eine Vorstandslage zumindest eines Teilbereiches des Schneidmessers über die Schalenaufnahme hinaus, wobei dieser Vorstandsbereich des Schneidmessers bevorzugt winkelartig gebildet ist. Es handelt sich bei diesem Vorstandsbereich somit um einen winkelartigen Vorstandsbereich. So kann sich mit Bezug auf die vorbeschriebene Projektion in eine Ebene quer zur Schwenkachse ein Vorstandsbereich ergeben mit zwei in einem Winkel von bevorzugt 75 bis 115 Grad, weiter bevorzugt etwa 90 Grad zueinander einschließenden Kanten, wobei zumindest eine Kante eine Schneidkante bildet. Zumindest eine dieser Kanten kann sich als gedachte, geradlinig Enden beispielsweise der Schneidkante verbindende Linie darstellen.

Der winkelartige Vorstandsbereich des Schneidmessers kann entsprechend weiter durch einen Kurzschenkel und einen Langschenkel gebildet sein. Der Langschenkel kann dabei weiter, wie auch bevorzugt, ein Teilabschnitt der Schneidkante des Schneidmessers sein oder auch ein Teilabschnitt der vorbeschriebenen gedachten geraden Linie.

In handhabungstechnisch vorteilhafter Weise kann ein V-Schenkel der Schalenaufnahme des einen (zweiten) Schalenteils endseitig in eine nach innen in Richtung auf das Schneidmaul gewandte Krümmung übergehen. So kann weiter, insbesondere ausgehend von der weiter bevorzugt verrundet ausgestalteten V-Spitze jeder V-Schenkel in der Ebene quer zur Schwenkachse (zunächst) zumindest annähernd geradlinig verlaufen. Der geradlinige Verlauf des bevorzugt der Schwenkachse abgewandten V-Schenkels geht in Richtung auf sein radial äußeres freies Ende in die vorbeschriebene Krümmung über. Mit diesem endseitig gekrümmten Endbereich übergreift das längere zweite Schalenteil das erste Schalenteil mit radialem Abstand, insbesondere bei vollständig zusammengefahrenen Schalenteilen.

Die vorbeschriebene Krümmung des V-Schenkels kann, wie auch bevorzugt, im Wesentlichen kreisabschnittsförmig gebildet sein.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, gegebenenfalls also auch dimensionslos. Beispielsweise beinhaltet die Angabe 80 bis 100° auch die Offenbarung von 80,1 bis 100 Grad, 80 bis 99,9 Grad, 80,1 bis 99,9 Grad, etc., die Offenbarung von 0,5- bis 0,85-Fach auch die Offenbarung von 0,6- bis 0,85-Fach, 0,5- bis 0,75-Fach, 0,6- bis 0,75-Fach etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Im Folgenden wird die Erfindung anhand von Ausführungsbeispielen näher erläutert. Es zeigen:
- Fig. 1: ein Schneidgerät in perspektivischer Darstellung;
- Fig. 2: das Schneidgerät in einer Seitenansicht;
- Fig. 3: das Schneidgerät in einer weiteren Seitenansicht;
- Fig. 4: das Schneidgerät in explosionsperspektivischer Darstellung;
- Fig. 5: das Schneidgerät in einer Querschnittdarstellung, betreffend eine Arbeitsstellung zum Schneiden eines Rohres bei mittiger Anordnung eines Schneidmessers;
- Fig. 6: den Längsschnitt durch das Schneidgerät in einer Arbeitsstellung gemäß Figur 5;
- Fig. 7: eine der Figur 5 entsprechende Darstellung, betreffend eine Arbeitsstellung zum Schneiden eines gegenüber der Darstellung in Figur 5 durchmesserverringerten Rohres;
- Fig. 8: eine weiter der Figur 5 entsprechende Darstellung, betreffend eine Arbeitsstellung zum Schneiden eines gegenüber der Darstellung in Figur 5 durchmesservergrößerten Rohres;
- Fig. 9: eine im Wesentlichen der Figur 2 entsprechende Darstellung, jedoch bei einer randnahen Anordnung eines Schneidmessers;
- Fig. 10: den Längsschnitt durch das Schneidgerät in einer Arbeitsstellung gemäß Figur 9;
- Fig. 11: das Schneidgerät in perspektivischer Darstellung, betreffend eine Verwahrstellung des Schneidgeräts;
- Fig. 12: das Schneidgerät in der Verwahrstellung in Seitenansicht;
- Fig. 13: das Schneidgerät gemäß Figur 12 in einer weiteren Seitenansicht;
- Fig. 14: das Schneidgerät gemäß Figur 12 in einer Draufsicht;
- Fig. 15: die Querschnittsdarstellung durch das Schneidgerät in der Verwahrstellung;
- Fig. 16: eine der Figur 15 entsprechende Darstellung;
- Fig. 17: den Bereich XVII in Figur 16, betreffend eine verriegelte Verwahrstellung.

### Beschreibung der Ausführungsformen

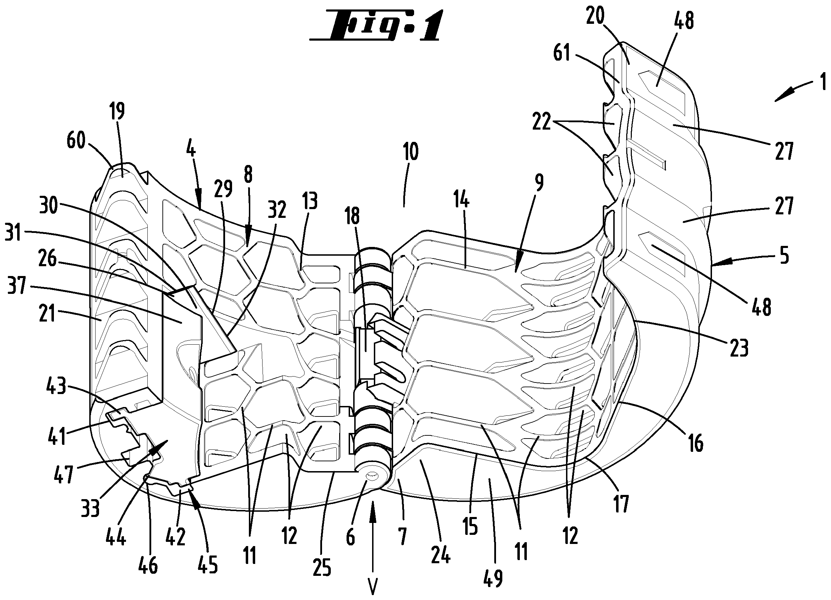

Dargestellt und beschrieben ist, zunächst mit Bezug zu den Figuren 1 bis 4, ein Schneidgerät 1 zum Ablängen von Rohren 2 und/oder Hülsen 3.

Das Schneidgerät 1 ist ausgelegt und ausgebildet zur Bedienung mit nur einer Hand, setzt sich darüber hinaus im Wesentlichen zusammen aus einem ersten Schalenteil 4 und einem zweiten Schalenteil 5, welche Schalenteile 4 und 5 in bevorzugter Ausgestaltung im Kunststoff-Spritzverfahren hergestellt sind sowie einem in dem dargestellten Ausführungsbeispiel in dem ersten Schalenteil 4 gehalterten Schneidmesser 26.

Im Bereich aufeinander zuweisender Längsrändern 6, 7 sind die Schalenteile 4 und 5 scharnierartig wirkend miteinander verbunden, wobei sich eine geometrische Schwenkachse x ergibt. In Ausrichtung der Schwenkachse x ergibt sich insgesamt eine Längserstreckung L des Schneidgeräts 1.

Es ergibt sich ein Verbindungsbereich V, in welchem die Schwenkachse x verläuft.

Die beiden Schalenteile 4 und 5 formen aufeinander zu weisende Schalenaufnahmen 8 und 9, wobei die die Schalenaufnahmen 8 und 9 bildenden Flächen 13 und 14 für das zu schneidende Rohr 2 beziehungsweise die zu schneidende Hülse 3 im Wesentlichen und bevorzugt durch in Richtung auf das sich zwischen den Schalenaufnahmen 8 und 9 ergebende Schneidmaul 10 weisender Stirnflächen 11 von in dem jeweiligen Schalenteil 4 und 5 ausgeformten Rippen 12 gebildet sind. Darüber hinaus sind diese Flächen 13 und 14 der Schalenteile 4 und 5 teilweise weiter auch gebildet durch eine die Stirnflächen 11 im Wesentlichen verbindende geometrische Hüllfläche H.

Die Schalenteile 4 und 5 können, über die Längserstreckung L betrachtet, jeweils eine insbesondere bezüglich der jeweiligen Schalenaufnahme 8 und 9, wie auch weiter bevorzugt bezüglich der Außenkontur, im Wesentlichen durchgehend gleichbleibende Querschnittsgestaltung aufweisen.

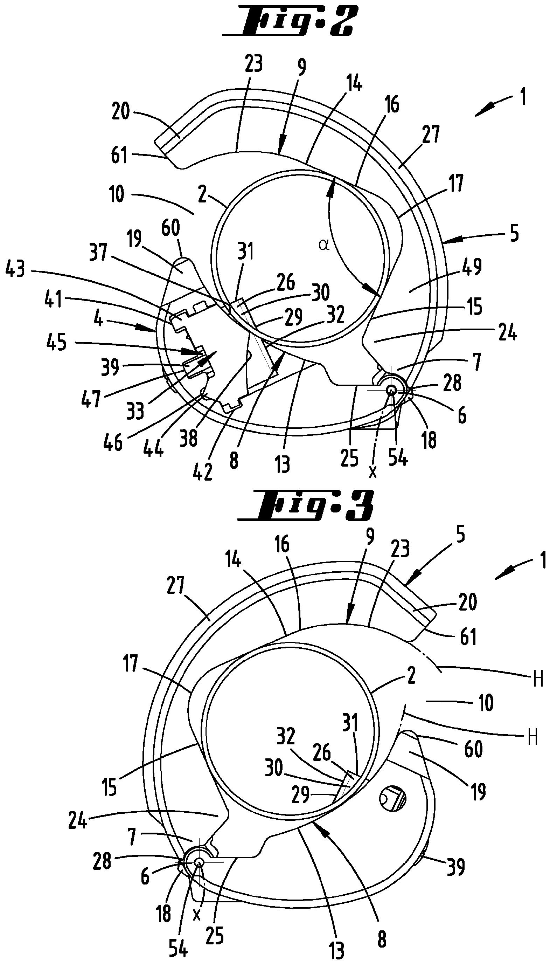

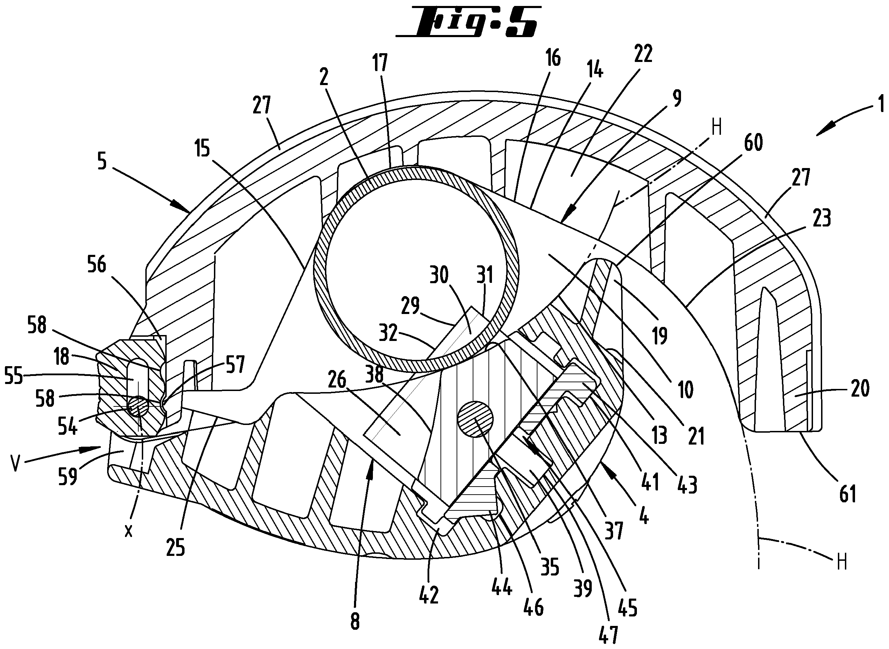

Die Schalenaufnahme 8 beziehungsweise die die Aufnahme im Wesentlichen bildende Fläche 13 des ersten Schalenteils 4 erstreckt sich mit Bezug auf eine Seitenansicht gemäß Figur 2 beziehungsweise mit Bezug auf einen Querschnitt gemäß Figur 5 entlang einer von außen in Richtung auf das Schneidmaul 10 betrachteten konkaven Kreisbogenlinie.

Die Schalenaufnahme 9 des zweiten Schalenteils 5 ist hingegen ebenfalls mit Bezug zu einer Seitenansicht beziehungsweise zu einem quer zur Schwenkachse x gegebenen Querschnitt im Wesentlichen V-förmig ausgebildet, aufweisend zwei, einen Winkel α von bevorzugt etwa 90 Grad zueinander einschließende V-Schenkel 15 und 16, wobei die V-Öffnung dieser Schalenaufnahme 9 der kreisbogenförmig verlaufenden Schalenaufnahme 8 des ersten Schalenteils 4 zugewandt ist. Entsprechend ergibt sich zwischen diesen Schalenaufnahmen 8 und 9 das Schneidmaul 10.

Die beiden V-Schenkel 15 und 16 sind im Bereich einer V-Spitze über einen Kreisbogenabschnitt 17 miteinander verbunden. Dieser Kreisbogenabschnitt 17 weist dabei bevorzugt einen Radius r auf, der etwa dem 0,2- bis 0,4-Fachen, weiter etwa dem 0,25- bis 0,3-Fachen des Radius r' der kreisbogenförmigen Schalenaufnahme 8 entsprechen kann.

Die, ausgehend von dem Kreisbogenabschnitt 17 in der Seitenansicht beziehungsweise im Querschnitt bevorzugt im Wesentlichen geradlinig verlaufenden V-Schenkeln 15 und 16 können sich, wie auch weiter bevorzugt, über etwa dasselbe Maß erstrecken, wobei gemäß der dargestellten Ausführungsform der V-Schenkel 15 bevorzugt in den achsnahen Längsrand 7 des die V-förmige Schalenaufnahme 9 aufweisenden zweiten Schalenteils 5 einläuft.

Der andere V-Schenkel 16 geht endseitig, d. h. abgewandt dem Kreisbogenabschnitt 17, über in eine nach innen und somit im Wesentlichen in Richtung auf das Schneidmaul 10 gewandte Krümmung 23. Diese Krümmung 23 kann dabei mit Bezug auf die Seitenansicht beziehungsweise auf den Querschnitt im Wesentlichen kreisabschnittsförmig gebildet sein, weiter bevorzugt mit einem Radius r", welcher etwa dem 0,5- bis 0,75-Fachen, weiter bevorzugt etwa dem 0,6- bis 0,7-Fachen des Radius r' der kreisförmigen Schalenaufnahme 8 des ersten Schalenteils 4 entsprechen kann.

Die Geometrie der Schalenaufnahme 9 des zweiten Schalenteils 5 kann weiter so gewählt sein, dass eine senkrecht zu einer Winkelhalbierenden w der V-förmigen Schalenaufnahme 9 verlaufende und die Schwenkachse x schneidende Linie u zum einen die Schalenaufnahme 9 etwa im Übergangsbereich von dem V-Schenkel 16 in die Krümmung 23 im Punkt P schneidet und zum anderen den in den Längsrand 7 einlaufenden V-Schenkel 15 in einem Punkt P'. Es kann sich entsprechend in dem, dem Verbindungsbereich V zugewandten Endbereich des Schalenteils 5 ein im Querschnitt dreieckförmiger Stützabschnitt 24 ergeben, der zum einen begrenzt ist durch einen endseitigen Abschnitt des V-Schenkels 15, mit einer Erstreckungslänge, die etwa ein Viertel oder ein Fünftel der Gesamtlänge des V-Schenkels 16 entsprechen kann, sowie durch den hieran anschließenden Längsrand 7 und durch die geometrische Linie u. Eine die Linie u sowie die Schwenkachse x aufnehmende Ebene wird entsprechend durchsetzt durch den, den Stützabschnitt 24 bildenden Bereich des Schalenteiles 5 wie auch durch den freien Endabschnitt mit der Krümmung 23.

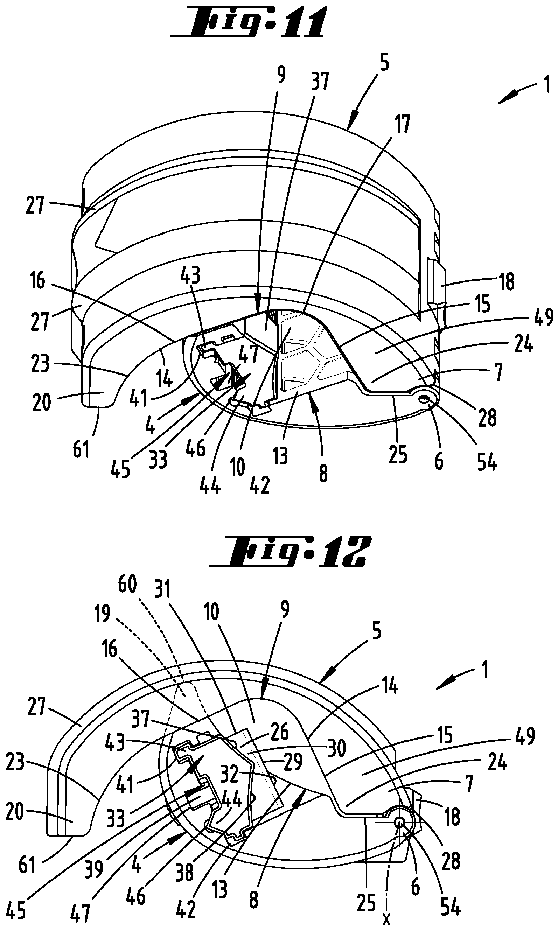

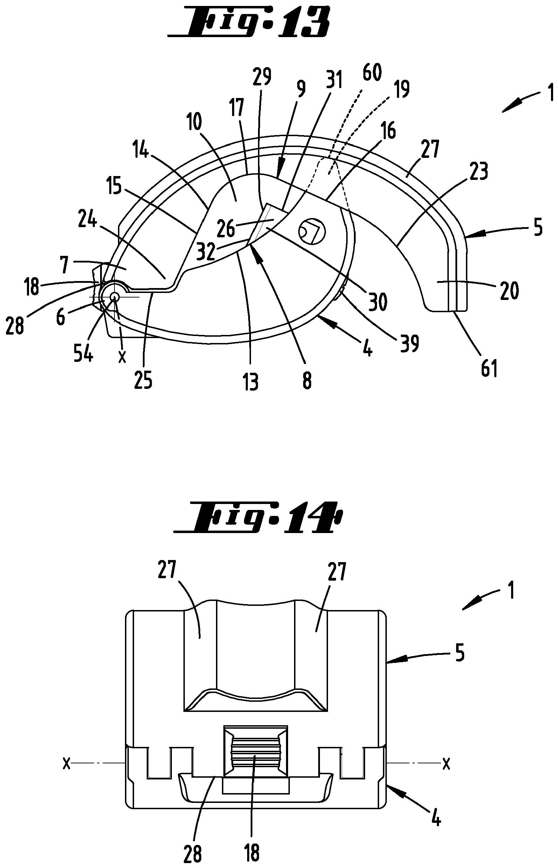

Mit Bezug auf eine Verwahr- beziehungsweise Transportposition der Schalenteile 4 und 5 gemäß der Darstellung in den Figuren 11 bis 16, welche Stellung durch einen in dem Verbindungsbereich V von außen zugänglichen Riegel 18 gesichert sein kann, ergeben sich quer zur Erstreckungsrichtung der Schwenkachse x, bevorzugt parallel zu der vorbeschriebenen Linie u und somit senkrecht zu der Winkelhalbierenden w betrachtete unterschiedliche Erstreckungslängen a und b der Schalenteile 4 und 5. Bevorzugt ergibt sich so ein kürzeres erstes Schalenteil 4 und ein zweites längeres Schalenteil 5, wobei die vorbeschriebene Länge a des kürzeren Schalenteils 4 etwa dem 0,6- bis 0,9-Fachen, weiter bevorzugt etwa dem 0,7- bis 0,8-Fachen, weiter bevorzugt etwa dem 0,75-Fachen der vorbeschriebenen Erstreckungslänge b des längeren Schalenteils 5 entsprechen kann.

Auch kann in dieser Verwahr- beziehungsweise Transportposition der Schalenteile 4 und 5 die vorbeschriebene Senkrechte (Linie u) eine im Querschnitt im Wesentlichen dreieckförmige Einsenkung 25 in dem ersten Schalenteil 4 begrenzen, welche Einsenkung 25 querschnittsmäßig angepasst sein kann an den Konturverlauf des Stützabschnittes 24 des zweiten Schalenteils 5. So kann weiter die Einsenkung 25 eine Abstützung für den Stützabschnitt 24 anbieten, beispielsweise zur Bildung einer Anschlagbegrenzung in Schwenk-Einwärtsrichtung des ersten Schalenteils 4.

Auch ergibt sich weiter bevorzugt eine Bewegung der radial äußeren freien Enden 19 und 20 der Schalenteile 4 und 5 im Zuge einer Verschwenkung der Schalenteile 4 und 5 relativ zueinander um unterschiedliche äußere Schwenkradien tₐ und t_{a'}. Das Verhältnis der sich auf die Schwenkachse x beziehenden Schwenkradien tₐ und t_{a'} kann im Wesentlichen dem vorbeschriebenen Verhältnis der Längen a und b der Schalenteile 4 und 5 entsprechen.

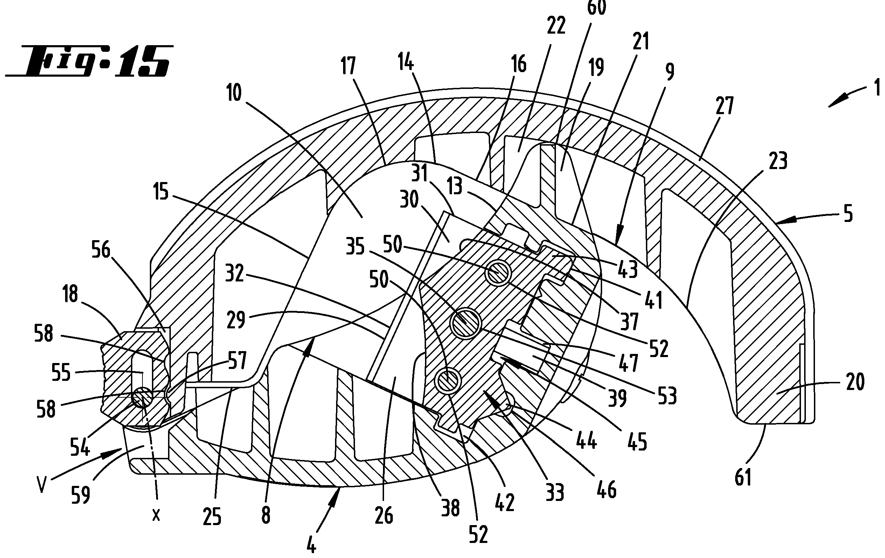

Zufolge der vorbeschriebenen Geometrien der beiden Schalenteile 4 und 5 ergibt sich im Zuge eines Einschwenken des kürzeren ersten Schalenteils 4 in Richtung auf das längere zweite Schalenteil 5 eine Verringerung der Querschnittsfläche des Schneidmauls 10, wobei zumindest in der vollständig zusammengefahrenen Stellung der Schalenteile 4 und 5, darüber hinaus bevorzugt bereits über einen Schwenkwinkel von etwa 10 bis 20 Grad vor Erreichen einer bevorzugt anschlagbegrenzten zusammengefahrenen Stellung, die die Schalenaufnahme 9 bildende Fläche 14 des zweiten Schalenteils 5 von dem radial äußeren Ende 19 des ersten kürzeren Schalenteils 4 durchsetzt ist (vergleiche Figur 15).

Es ergibt sich bevorzugt in der zusammengefahrenen Stellung beziehungsweise über den vorbeschriebenen Schwenkwinkel vor Erreichen der zusammengefahrenen Stellung eine Durchdringung der die Schalenaufnahmen 8 und 9 bildenden Flächen 13 und 14 beider Schalenteile 4 und 5. Dies kann, wie auch bevorzugt, dadurch erreicht sein, dass das radial äußere freie Ende 19 des ersten kürzeren Schalenteils 4 durch einzelne, in Richtung der Schwenkachse x zueinander beabstandete rippenartige Vorsprünge 21 gebildet ist, welche Vorsprünge 21 in Bereiche zwischen den Rippen 12 des zweiten Schalenteils 5 ausgebildete Vertiefungen 22 greifen.

Auch ist, wie aus der Darstellung in Figur 12 zu erkennen, insbesondere das äußere freie Ende 20 des zweiten Schalenteils 5 in einer Schwenkrichtung c frei von einer Überdeckung durch das erste Schalenteil 4. Vielmehr liegt in dieser zusammengefahrenen Stellung eine Verschachtelung der Schalenteile 4 und 5 vor.

Weiter bevorzugt bewegt sich mit Bezug auf die Schwenkachse x die in Schwenkrichtung c weisende Stirnfläche 60 des ersten Schalenteils 4 innerhalb des diesbezüglichen äußeren Schwenkradius tₐ und eines inneren Schwenkradius tᵢ. Diese Schwenkradien tₐ und tᵢ begrenzen entsprechend im Wesentlichen die Stirnfläche 60 radial außen und radial innen.

Eine solche Begrenzung ist bevorzugt auch bei der Stirnfläche 61 des zweiten Schalenteils 5 gegeben, die durch den äußeren Schwenkradius t_{a'} und einen inneren Schwenkradius t_{i'} in ihrer radialen Ausdehnung definiert ist.

Bei einer Verschwenkung bewegt sich die Stirnfläche 60 des ersten Schalenteils 4 zwischen den Schwenkradien tₐ und tᵢ, welche dabei nach radial innen versetzt sind zu den sich ebenfalls auf die Schwenkachse x beziehenden Schwenkradien f_{a'} und t_{i'} des zweiten Schalenteils 5. Der radial äußere Schwenkradius tₐ des ersten Schalenteils 4 ist entsprechend bevorzugt kleiner gewählt als der radial innere Schwenkradius t_{i'} des zweien Schalenteils 5. So kann das Maß des äußeren Schwenkradius tₐ des ersten Schalenteils 4 etwa dem 0,5- bis 0,9-Fachen, weiter bevorzugt etwa dem 0,7- bis 0,8-Fachen des Maßes des inneren Schwenkradius t_{i'} des zweiten Schalenteils 5 entsprechen.

Eine Anschlagbegrenzung in der zusammengefahrenen Stellung der Schalenteile 4 und 5 kann des Weiteren dadurch erreicht sein, dass im Wurzelbereich der Vorsprünge 21 benachbarte, die Vorsprünge 21 zueinander beabstandende Bereiche gegen die Stirnflächen 11 der Rippen 12 des zweiten Schalenteils 5 treten.

Bei der sich in Längserstreckung L in der Verwahr- beziehungsweise Transportposition des Schneidgeräts 1 ergebenden partiellen Überdeckung der Schalenteile 4 und 5 kann mit Bezug auf einen Querschnitt beziehungsweise eine Seitenansicht die Außenwandung 26 des ersten Schalenteils 4 etwa in dem vorbeschriebenen Punkt P die Kontur der Schalenaufnahme 9 des zweiten Schalenteils 5 schneiden.

Wandungsaußenseitig können die Schalenteile 4 und 5 mehrere, bevorzugt in Richtung der Schwenkachse x zueinander beabstandete Rippenausformungen 27 aufweisen. Diese Rippenausformungen 27 erstrecken sich entsprechend quer zu der Schwenkachse x, wobei weiter gemäß der Darstellung in Figur 11 die Rippenausformungen 27 sich über die gesamte Erstreckung des zweiten, längeren Schalenteils 5 quer zur Schwenkachse x erstrecken können. Weiter können diese Rippenausformungen 27 des zweiten Schalenteils 5 mit Unterbrechung durch den sich im Verbindungsbereich V ergebenden Spalt 28 zwischen den Schalenteilen 4 und 5 in dem ersten Schalenteil 4 zumindest über einen Teilabschnitt fortsetzen.

Das in dem ersten Schalenteil 4 gehalterte Schneidmesser 26 ragt insbesondere mit dessen, in dem dargestellten Ausführungsbeispiel geradlinig verlaufenden Schneidkante 29 zumindest partiell über die Fläche 13 der zugeordneten Schalenaufnahme 8 hinaus in das Schneidmaul 10. So kann entsprechend die Kreisabschnittsform der Schalenaufnahme 8 durch das vorstehende Schneidmesser 26 unterbrochen sein, wobei sich der Vorstandsbereich 30 des Schneidmessers 26 im Querschnitt winkelartig abbildet.

Das Schneidmesser 26 erstreckt sich insbesondere im Bereich der Schneidkante 29 in einer quer zur Schwenkachse x gerichteten Schneidebene S, in welcher sich auch die vorbeschriebenen Konturen der Schalenaufnahmen 8 und 9 ergeben.

Der Vorstandsbereich des Schneidmessers 26 kann dabei, wie bevorzugt, durch einen Kurzschenkel 31 und einen Langschenkel 32 gebildet sein, wobei der Langschenkel 32 durch einen Abschnitt der Schneidkante 29 gegeben sein kann. So kann weiter der Langschenkel 32 beispielsweise eine Länge aufweisen, die etwa der halben Gesamtlänge der Schneidkante 29 entsprechen kann. Bevorzugt ist allein der im Langschenkel 32 gegebene Abschnitt der Schneidkante 29 schneidaktiv.

Zudem sind der Langschenkel 32 und der Kurzschenkel 31 bevorzugt in einem 90 Grad-Winkel zueinander ausgerichtet, wobei weiter insbesondere der durch einen Teilabschnitt der Schneidkante 29 gebildete Langschenkel 32 einen spitzen Winkel β von etwa 30 bis 45 Grad zu einer Tangente T des Kreisbogens der Schalenaufnahme 8 einschließen kann. Mit Bezug auf einen Querschnitt gemäß der Darstellung in Figur 15 beziehungsweise 16 ist dabei die Schneidkante 29, ausgehend von der Fläche 13 der Schalenaufnahme 8, abweisend zu der Schwenkachse x in Richtung auf das freie radiale Ende 19 geneigt.

Das Schneidmesser 26 ist weiter bevorzugt in einem auswechselbaren Messerträger 33 angeordnet. Bevorzugt ist eine im Wesentlichen mit Bezug zu der Längserstreckung L betrachtete im Wesentlichen endseitige Anordnung des Schneidmessers 26 im Bereich einer Stirnseite des Messerträgers 33, wobei weiter bevorzugt das Schneidmesser 26 zwischen dem blockartigen Messerträger 33 und einer endseitigen Deckplatte 34 eingespannt ist. Die Halterung des Schneidmessers 26 ist dabei bevorzugt erreicht zufolge einer Verschraubung, wobei die diesbezügliche Schraube 35 die Deckplatte 34 und das Schneidmesser 26 im Bereich einer Bohrung 36 durchsetzt, zum Gewindeeingriff in eine Gewindebohrung im Messerträger 33. Die Schraubenachse ist bevorzugt gleichgerichtet zu der Schwenkachse x.

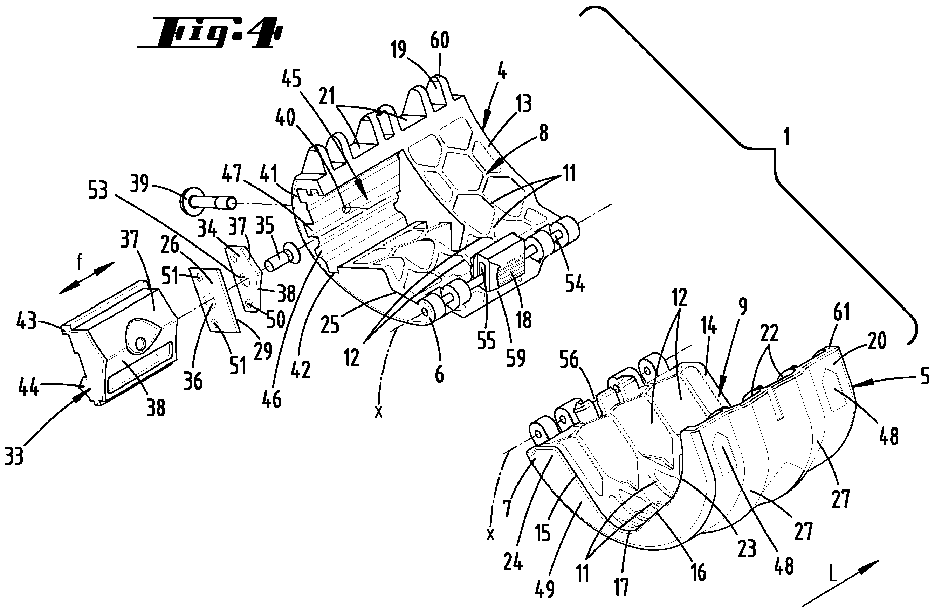

Zur drehsicheren Halterung des Schneidmessers 26 an dem Messerträger 30 kann die Deckplatte 34, wie auch das Schneidmesser 26, benachbart zu einer Bohrung 53 für die Schraube 35 zapfenartige Vorsprünge 50 aufweisen, zum Durchgriff messerseitiger Durchbrüche 51 und zum Eingriff in topfartige Vertiefungen 52 im Messerträger 30 (vergleiche Figuren 4 und 15).

Die zu dem Schneidmaul 10 gewandte Oberfläche des Messerträgers 33 wie auch der Deckplatte 34 ist mit Bezug auf einen Querschnitt durch das Schneidgerät 1, beziehungsweise mit Bezug auf eine parallel zu der Schneidebene S verlaufenden Ebene angepasst an den kreisabschnittsförmigen Verlauf der Schalenaufnahme 8, sodass sich die, die Schalenaufnahme 8 bildende Fläche 13 im Bereich des Messerträgers 33 im Wesentlichen fortsetzt. Es ergibt sich entsprechend eine kreisabschnittsförmig gekrümmte Fläche 37 beziehungsweise 38 oberseitig des Messerträgers 33 beziehungsweise der Deckplatte 34.

Der Messerträger 33 ist des Weiteren in dem ersten Schalenteil 4 in Richtung der Schwenkachse x beweglich, insbesondere verschiebbar angeordnet, wobei weiter die Anordnungsstellung bevorzugt gesichert ist durch eine senkrecht zur Verschieberichtung f des Messerträgers 33 das Schalenteil 4 durchsetzende, von außen zugängliche Schraube 39. Die Aufnahme 40 in dem Messerträger 33 für die Schraube 39 erstreckt sich entsprechend quer zu der Verschieberichtung f beziehungsweise zu der Schwenkachse x.

Der Messerträger 33 kann in dem Schalenteil 4 schienenartig geführt sein, wozu in dem Schalenteil 4 sich in Richtung der Schwenkachse x erstreckende, nutartige Führungsaufnahmen 41 und 42 vorgesehen sind. Diese Führungsaufnahmen 41 und 42 sind mit Bezug auf einen Querschnitt bevorzugt beidseitig vorgesehen, jedoch in einer Richtung senkrecht zur Verschieberichtung f in unterschiedlichen Höhen.

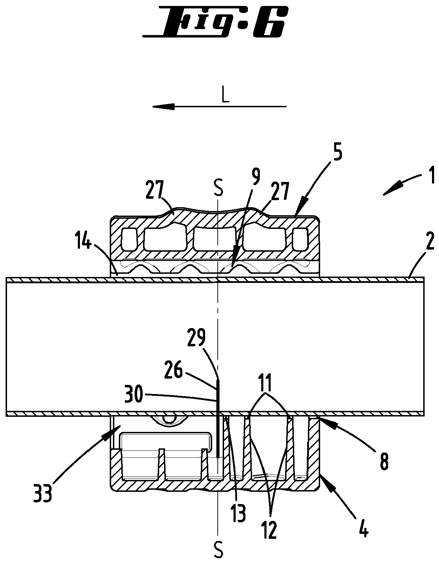

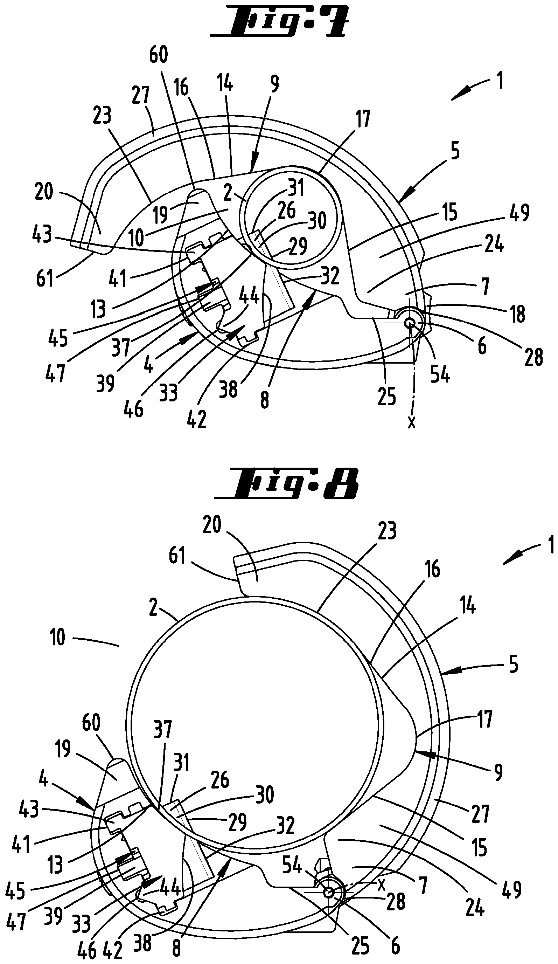

Der Messerträger 33 weist seitlich einen Führungsvorsprung 43 auf. Dieser greift in einer Ausrichtung des Messerträgers 33 gemäß den Darstellungen in den Figuren 1 bis 8 in die untere, weiter zu der Fläche 13 der Schalenaufnahme 8 beabstandete Führungsaufnahme 41 ein, während weiter ein bodenseitiger, im Querschnitt etwa dreieckförmiger Stützabschnitt 44 eine Führung in einer bodenseitig der Trägeraufnahme 45 ausgebildeten Einsenkung 46 erfährt.

In dieser Anordnung des Messerträgers 33 ist das Schneidmesser 26 bevorzugt im Wesentlichen mittig der Längserstreckung L des Schalenteils 4 angeordnet, wobei die Fläche 37 des Messerträgers 33 die, die Schalenaufnahme 8 bildende Fläche 13 des ersten Schalenteiles 4 ergänzt.

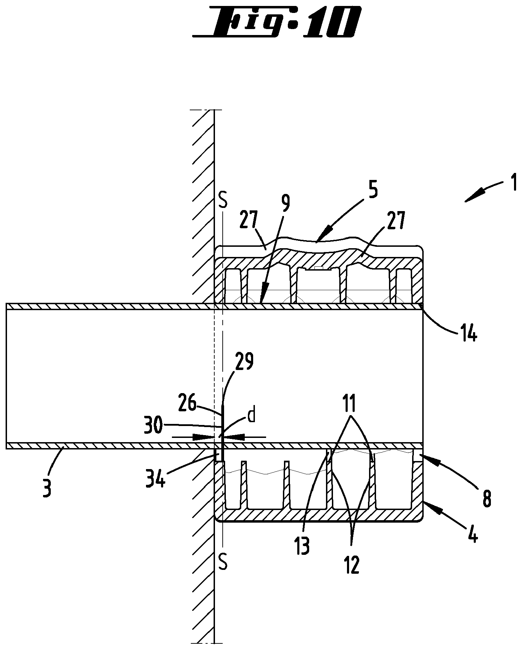

Der Messerträger 33 kann im Wesentlichen um eine in Richtung der Schraube 39 gerichtete Achse gewendet werden, sodass hiernach das Schneidmesser 26 randnah des Schalenteils 4 angeordnet ist. Es ergibt sich hiernach allein eine Beabstandung zum Schalenrand 49 in Abhängigkeit von der Dicke der das Schneidmesser 26 halternden Deckplatte 34. Es kann ein Abstandsmaß d zwischen dem Schalenrand 49 und der Schneidkante 29 von beispielsweise 2 bis 5 mm, weiter beispielsweise etwa 3 mm gegeben sein (vergleiche Figur 10). In dieser Konstellation kann das Schneidgerät 1 insbesondere dazu dienen, Hülsen 3, weiter beispielsweise sogenannte Tropfhülsen, abzulängen.

In der gewendeten Messerträger-Stellung greift der Führungsvorsprung 43 in die weitere, geringer zu der Fläche 13 der Schalenaufnahme 8 beabstandete Führungsaufnahme 42 ein, während der Stützabschnitt 44 eine spitzenseitige Abstützung in einer weiteren im Querschnitt dreieckförmigen Einsenkung 47 der Trägeraufnahme 45 erfährt. In dieser Ausrichtung ergibt sich ein gegenüber der mittigen Anordnung des Schneidmessers 26 größere Vorstandslage des Schneidmessers 26, insbesondere der Schneidkante 29, wobei weiter dabei die weitere Fläche 38 des Messerträgers 33 die Fläche 13 der Schalenaufnahme 8 ergänzt.

Wie aus der Figur 10 ersichtlich, entspricht in dieser äußeren Schneidmesser-Anordnung ein Maß e zwischen dem Übergangsbereich der V-Schenkel 15 und 16 und dem Schnittpunkt einer Winkelhalbierenden zwischen den Schenkeln 15 und 16 und der Fläche der Schalenaufnahme 8 etwa einem 1,3- bis 2-Fachen, weiter etwa einem 1,5-Fachen des Maßes e in der mittigen und bezogen auf die Trägeraufnahme 45 unteren Anordnung des Schneidmessers 26 (vergleiche Figur 15).

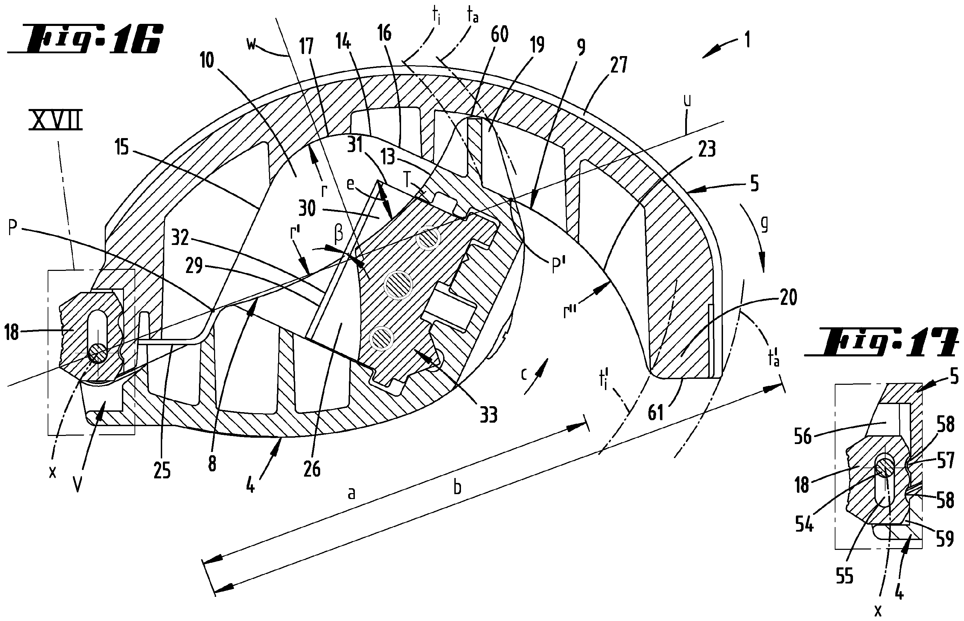

Wie weiter beispielsweise aus der Darstellung in der Figur 16 zu erkennen, erstrecken sich im Querschnitt beziehungsweise in der Seitenansicht die Flächen 37 und 38 des Messerträgers 33 sichelartig beziehungsweise dachartig ansteigend.

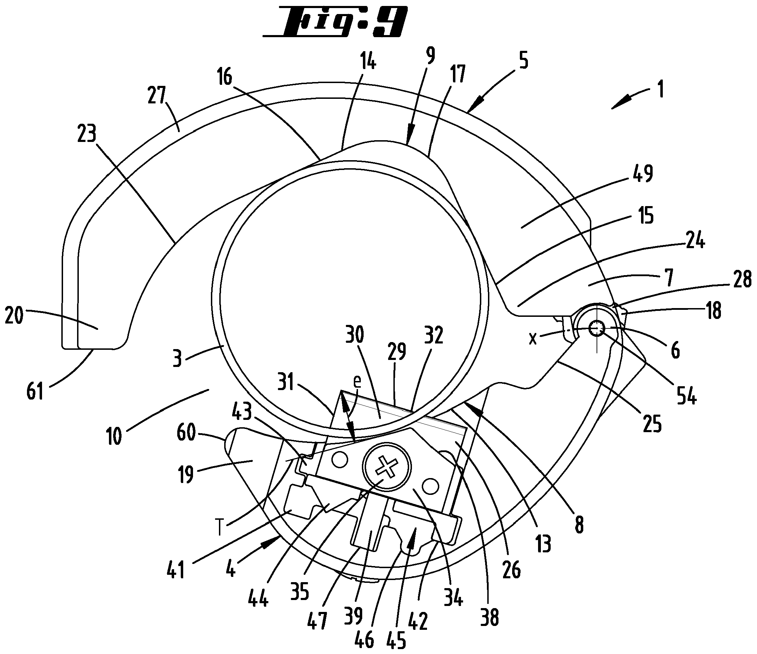

Die Figuren 9 und 10 zeigen die Nutzung des Schneidgeräts 1 bei mittiger Anordnung des Schneidmessers 26 zum Ablängen von Rohren 2 im Zuge der Bearbeitung von Rohren 2 unterschiedlicher Durchmesser. Die Schneidrichtung g, in welcher das Schneidgerät 1 unter Krafteinwirkung von außen auf die Schalenteile 4, 5 in Richtung auf das Schneidmaul 10 um das Rohr 2 beziehungsweise die Hülse 3 gedreht wird, kann außenseitig an dem Schneidgerät 1 durch Symbole 48 vorgegeben sein.

Der die Verwahrstellung sichernde Riegel 18 kann, wie dargestellt, von dem die geometrische Schwenkachse x bildenden Achskörper 54 im Bereich einer senkrecht zur Schwenkachse x verlaufenden Langlochdurchbrechung 55 durchsetzt sein, dies bevorzugt bei seitlicher Führung durch dem Verbindungsbereich V nahe Abschnitte des zweiten Schalenteils 5. In diesem Bereich ist der Riegel 18 in einer taschenartigen, randoffenen Ausnehmung 56 des zweiten Schalenteils 5 aufgenommen. Ein in diese Ausnehmung 56 in Richtung auf den Riegel 18 vorstehender, überlaufbarer Rastvorsprung 57 lässt in Zusammenwirkung mit zwei in Erstreckungsrichtung der Langlochdurchbrechung 55 beabstandeten Rastausnehmungen 58 zwei Raststellungen des Riegels 18 zu. So eine die Verschwenkung des ersten Schalenteils 4 relativ zu dem zweiten Schalenteil 5 zulassende Stellung gemäß Figur 15 und eine Verriegelungsstellung gemäß Figur 17, in der der Riegel 18 den Spalt 28 zwischen den Längsrändern 6 und 7 quert und in eine Ausnehmung 59 des ersten Schalenteils 4, eine Verschwenkung hindernd, eingreift.

### Liste der Bezugszeichen

| | | | |
|---|---|---|---|
| 1 | Schneidgerät | 29 | Schneidkante |
| 2 | Rohr | 30 | Vorstandsbereich |
| 3 | Hülse | 31 | Kurzschenkel |
| 4 | Schalenteil | 32 | Langschenkel |
| 5 | Schalenteil | 33 | Messerträger |
| 6 | Längsrand | 34 | Deckplatte |
| 7 | Längsrand | 35 | Schraube |
| 8 | Schalenaufnahme | 36 | Bohrung |
| 9 | Schalenaufnahme | 37 | Fläche |
| 10 | Schneidmaul | 38 | Fläche |
| 11 | Stirnfläche | 39 | Schraube |
| 12 | Rippe | 40 | Aufnahme |
| 13 | Fläche | 41 | Führungsaufnahme |
| 14 | Fläche | 42 | Führungsaufnahme |
| 15 | V-Schenkel | 43 | Führungsvorsprung |
| 16 | V-Schenkel | 44 | Stützabschnitt |
| 17 | Kreisbogenabschnitt | 45 | Trägeraufnahme |
| 18 | Riegel | 46 | Einsenkung |
| 19 | Ende | 47 | Einsenkung |
| 20 | Ende | 48 | Symbol |
| 21 | Vorsprung | 49 | Schalenrand |
| 22 | Vertiefung | 50 | Vorsprung |
| 23 | Krümmung | 51 | Durchbruch |
| 24 | Stützabschnitt | 52 | Vertiefung |
| 25 | Einsenkung | 53 | Bohrung |
| 26 | Schneidmesser | 54 | Achskörper |
| 27 | Rippenausformung | 55 | Langlochdurchbrechung |
| 28 | Spalt | 56 | Ausnehmung |
| 57 | Rastvorsprung | H | Hüllfläche |
| 58 | Rastausnehmung | L | Längserstreckung |
| 59 | Ausnehmung | P | Punkt |
| 60 | Stirnfläche | P' | Punkt |
| 61 | Stirnfläche | S | Schneidebene |
| | | T | Tangente |
| | | V | Verbindungsbereich |
| a | Länge | | |
| b | Länge | | |
| c | Schwenkrichtung | α | Winkel |
| d | Abstandsmaß | β | Winkel |
| e | Maß | | |
| f | Verschieberichtung | | |
| g | Schneidrichtung | | |
| r | Radius | | |
| r' | Radius | | |
| r" | Radius | | |
| tₐ | äußerer Schwenkradius | | |
| t_{a'} | äußerer Schwenkradius | | |
| tᵢ | innerer Schwenkradius | | |
| t_{i'} | innerer Schwenkradius | | |
| u | Linie | | |
| w | Winkelhalbierende | | |
| x | Schwenkachse | | |

## Patentansprüche

1. Schneidgerät (1) zum Ablängen von Rohren (2) oder Hülsen (3), mit einem Schneidmaul (10), bestehend aus zwei Schalenteilen (4, 5), einem ersten und einem zweiten Schalenteil (4, 5), mit jeweils einer ersten und einer zweiten Schalenaufnahme (8, 9), wobei die Schalenteile (4, 5) zueinander um eine Schwenkachse (x) verschwenkbar sind, **dadurch gekennzeichnet, dass** mit Bezug auf die Schwenkachse (x) radial äußere Enden (19,20) der Schalenteile (4, 5) auf unterschiedlichen Radien (tₐ, t_{a'}) bewegbar sind, dass das radial kürzere erste Schalenteil (4) bis in eine Überdeckung zu der zweiten Schalenaufnahme (9) des zweiten Schalenteils (5) bewegbar ist, dass bei vollständig zusammengefahrenen Schalenteilen (4, 5) das radial äußere freie Ende (20) des zweiten Schalenteils (9) in einer Schwenkrichtung (c) frei von einer Überdeckung durch das erste Schalenteil (4) ist und dass eine die zweite Schalenaufnahme (9) bildende Fläche (14) des zweiten Schalenteils (5) von dem radial äußeren Ende (19) des ersten Schalenteils (4) durchsetzbar ist.

2. Schneidgerät nach Anspruch 1, **dadurch gekennzeichnet, dass** die Fläche (14) der zweiten Schalenaufnahme (9) teilweise als reale Fläche und teilweise als Hüllfläche (H) gebildet ist, wobei, weiter bevorzugt, die Durchsetzung im Bereich der Hüllfläche (H) erreichbar ist.

3. Schneidgerät nach einem der vorhergehenden Ansprüche, **dadurch gekennzeichnet, dass** Flächen (13,14) für das zu schneidende Rohr (2) bzw. die zu schneidende Hülse (3) der Schalenaufnahmen (8, 9) im Wesentlichen durch in Richtung auf das sich zwischen den Schalenaufnahmen (8, 9) ergebende Schneidmaul (10) weisende Stirnflächen (11) von in dem jeweiligen Schalenteil (4, 5) ausgeformten Rippen (12) gebildet sind, wobei diese Flächen (13, 14) der Schalenteile (4, 5) teilweise weiter durch eine die Stirnflächen (11) im Wesentlichen verbindende geometrische Hüllfläche (H) gebildet sind.

4. Schneidgerät (1) nach einem der vorhergehenden Ansprüche, **dadurch gekennzeichnet, dass** die Schalenteile (4,5) außenseitig mehrere beabstandete Rippenausformungen (27) aufweisen, die sich quer zu der Schwenkachse (x) erstrecken.

5. Schneidgerät nach Anspruch 4, **dadurch gekennzeichnet, dass** sich eine Rippenausformung (27) des einen Schalenteils (5) mit Unterbrechung durch die Schwenkachse (x) fluchtend in dem anderen Schalenteil (4) fortsetzt.

6. Schneidgerät (1) nach einem der vorhergehenden Ansprüche, **dadurch gekennzeichnet, dass** ein Schneidmesser (26) in einem auswechselbaren Messerträger (33) angeordnet ist.

7. Schneidgerät nach Anspruch 6, **dadurch gekennzeichnet, dass** der Messerträger (33) wendbar in dem Schalenteil (4) angeordnet ist und/oder das Schneidmesser (26) bezüglich einer Längserstreckung (L) des Schneidgeräts (1) außermittig angeordnet ist.

8. Schneidgerät nach einem der Ansprüche 6 oder 7, **dadurch gekennzeichnet, dass** zum Auswechseln des Messerträgers (33) der Messerträger (33) in Richtung der Schwenkachse (x) beweglich in dem Schalenteil (4) angeordnet ist und/oder dass für den Messerträger (33) mehrere Führungsaufnahmen (41 ,42) vorgesehen sind, zur höhenmäßig unterschiedlichen Anordnung des Messerträgers (33) in dem Schalenteil (4).

9. Schneidgerät nach einem der Ansprüche 6 bis 8, **dadurch gekennzeichnet, dass** der Messerträger (33) mittels einer Schraube (39) in dem ersten Schalenteil (4) festsetzbar ist, wobei, bevorzugt, sich eine Aufnahme (40) für die Schraube (39) in dem Messerträger (33) quer zu einer Verschieberichtung (f) des Messerträgers (33) erstreckt.

10. Schneidgerät (1) nach einem der vorhergehenden Ansprüche, **dadurch gekennzeichnet, dass** das zweite Schalenteil (5) die V-förmige Schalenaufnahme (9) aufweist und dass ein Öffnungswinkel (α) der zweiten V-Schalenaufnahme (9) zwischen 80 und 100 Grad liegt.

11. Schneidgerät nach einem der vorhergehenden Ansprüche, **dadurch gekennzeichnet, dass** mit Ausnahme eines Schneidmessers (26) die erste Schalenaufnahme (8) des ersten Schalenteils (4) kreisabschnittsförmig als eine Kreisabschnittsform gebildet ist.

12. Schneidgerät nach Anspruch 11, **dadurch gekennzeichnet, dass** die Kreisabschnittsform durch das gegenüber der ersten Schalenaufnahme (8) vorstehende Schneidmesser (26) unterbrochen ist und dass ein Vorstandsbereich (30) des Schneidmessers (26) als ein winkelartiger Vorstandsbereich gebildet ist.

13. Schneidgerät nach Anspruch 12, **dadurch gekennzeichnet, dass** der winkelartige Vorstandsbereich (30) des Schneidmessers (26) durch einen Kurzschenkel (31) und einen Langschenkel (32) gebildet ist.

14. Schneidgerät nach einem der Ansprüche 10 bis 13, **dadurch gekennzeichnet, dass** ein V-Schenkel (15) der zweiten Schalenaufnahme (9) endseitig in eine nach innen gewandte Krümmung (23) übergeht.

15. Schneidgerät nach Anspruch 14, **dadurch gekennzeichnet, dass** die Krümmung (23) kreisabschnittsförmig gebildet ist.

## Claims

1. Cutting device (1) for cutting tubes (2) or sleeves (3) to length, with a cutting jaw (10) consisting of two shell parts (4, 5), a first and a second shell part (4, 5), each with a first and a second receiving shell part (8, 9), wherein the shell parts (4, 5) are pivotable relative to one another about a pivot axis (x), **characterised in that** radially outer ends (19, 20) of the shell parts (4, 5) are movable on different radii (tₐ, t_{a'} ) with respect to the pivot axis (x), that the radially shorter first shell part (4) can be moved into an overlap with the second receiving shell part (9) of the second shell part (5), that when the shell parts (4, 5) are moved together completely, the radially outer free end (20) of the second shell part (9) is free from being covered by the first shell part (4) in a swivelling direction (c) and that a surface (14) of the second shell part (5) forming the second receiving shell part (9) can be penetrated by the radially outer end (19) of the first shell part (4).

2. Cutting device according to claim 1, **characterised in that** the surface (14) of the second receiving shell part (9) is formed partly as a real surface and partly as an enveloping surface (H), wherein, further preferably, the penetration is achievable in the region of the enveloping surface (H).

3. Cutting device according to one of the preceding claims, **characterised in that** surfaces (13, 14) for the tube (2) to be cut or the sleeve (3) to be cut of the receiving shell part (8, 9) are essentially formed by end faces (11) of ribs (12) formed in the respective shell part (4, 5) and pointing in the direction of the cutting mouth (10) resulting between the receiving shell parts (8, 9), wherein these surfaces (13, 14) of the shell parts (4, 5) are partly further formed by a geometric enveloping surface (H) essentially connecting the end faces (11).

4. Cutting device (1) according to one of the preceding claims, **characterised in that** the shell parts (4, 5) have a plurality of spaced rib formations (27) on the outside, which extend transversely to the pivot axis (x).

5. Cutting device according to claim 4, **characterised in that** a rib formation (27) of one shell part (5) continues in alignment in the other shell part (4) with interruption by the swivel axis (x).

6. Cutting device (1) according to one of the preceding claims, **characterised in that** a cutting blade (26) is arranged in an exchangeable blade carrier (33).

7. Cutting device according to claim 6, **characterised in that** the blade carrier (33) is arranged reversibly in the shell part (4) and/or the cutting blade (26) is arranged eccentrically with respect to a longitudinal extension (L) of the cutting device (1).

8. Cutting device according to one of the claims 6 or 7, **characterised in that**, for replacing the blade carrier (33), the blade carrier (33) is arranged movably in the shell part (4) in the direction of the pivot axis (x) and/or **in that** a plurality of guide holders (41, 42) are provided for the blade carrier (33), for arranging the blade carrier (33) at different heights in the shell part (4).

9. Cutting device according to one of claims 6 to 8, **characterised in that** the blade carrier (33) can be fixed in the first shell part (4) by means of a screw (39), wherein, preferably, a receptacle (40) for the screw (39) in the blade carrier (33) extends transversely to a displacement direction (f) of the blade carrier (33).

10. Cutting device (1) according to one of the preceding claims, **characterised in that** the second shell part (5) has the V-shaped receiving shell part (9) and **in that** an opening angle (α) of the second V-shaped receiving shell part (9) is between 80 and 100 degrees.

11. Cutting device according to one of the preceding claims, **characterised in that**, with the exception of a cutting blade (26), the first receiving shell part (8) of the first shell part (4) is formed in a circular section shape as a circular section shape.

12. Cutting device according to claim 11, **characterised in that** the circular section shape is interrupted by the cutting blade (26) projecting from the first receiving shell part (8) and **in that** a projection region (30) of the cutting blade (26) is formed as an angular projection region.

13. Cutting device according to claim 12, **characterised in that** the angular projection region (30) of the cutting blade (26) is formed by a short leg (31) and a long leg (32).

14. Cutting device according to one of claims 10 to 13, **characterised in that** a V-leg (15) of the second receiving shell part (9) merges at the end into an inwardly turned curvature (23).

15. Cutting device according to claim 14, **characterised in that** the curvature (23) is formed in a circular section.

## Revendications

1. Appareil de coupe (1) pour la mise à longueur de tubes (2) ou de douilles (3), avec une mâchoire de coupe (10), composée de deux parties de coque (4, 5), une première et une deuxième partie de coque (4, 5), avec respectivement un premier et un deuxième logement de coque (8, 9), les parties de coque (4, 5) pouvant pivoter l'une par rapport à l'autre autour d'un axe de pivotement (x), **caractérisé en ce que**, par rapport à l'axe de pivotement (x), des extrémités radialement extérieures (19, 20) des parties de coque (4, 5) peuvent être déplacées sur des rayons différents (tₐ, t_{a'} ), que la première partie de coque (4) radialement plus courte peut être déplacée jusqu'à un recouvrement par rapport au deuxième logement de coque (9) de la deuxième partie de coque (5), que lorsque les parties de coque (4, 5), sont déplacées complètement repliés, l'extrémité libre radialement extérieure (20) de la deuxième partie de coque (9) est libre de tout recouvrement par la première partie de coque (4) dans une direction de pivotement (c) et **en ce qu'**une surface (14) de la deuxième partie de coque (5) formant le deuxième logement de coque (9) peut être traversée par l'extrémité radialement extérieure (19) de la première partie de coque (4).

2. Appareil de coupe selon la revendication 1, **caractérisé en ce que** la surface (14) du deuxième logement de coque (9) est formée en partie comme surface réelle et en partie comme surface d'enveloppe (H), où, de préférence encore, la pénétration peut être atteinte dans la zone de la surface d'enveloppe (H).

3. Appareil de coupe selon l'une des revendications précédentes, **caractérisé en ce que** des surfaces (13, 14), de logements de coque (8, 9), pour le tube (2) à couper ou pour le manchon à découper (3) sont essentiellement formées par des surfaces frontales (11), de nervures (12) formées dans la partie de coque respective (4, 5), orientées en direction de la bouche de coupe (10) se formant entre les logements de coque (8, 9), ces surfaces (13, 14) des parties de coque (4, 5) étant en outre partiellement formées par une surface d'enveloppe géométrique (H) reliant essentiellement les surfaces frontales (11).

4. Appareil de coupe (1) selon l'une des revendications précédentes, **caractérisé en ce que** les parties de coque (4, 5) présentent sur le côté extérieur plusieurs formations de nervures (27) espacées qui s'étendent transversalement à l'axe de pivotement (x).

5. Appareil de coupe selon la revendication 4, **caractérisé en ce qu'**une formation de nervure (27) de l'une des parties de coque (5) se prolonge en alignement dans l'autre partie de coque (4) avec une interruption par l'axe de pivotement (x).

6. Appareil de coupe (1) selon l'une des revendications précédentes, **caractérisé en ce qu'**une lame de coupe (26) est disposée dans un support de lame interchangeable (33).

7. Appareil de coupe selon la revendication 6, **caractérisé en ce que** le support de lame (33) est disposé de manière réversible dans la partie de coque (4) et/ou la lame de coupe (26) est disposée de manière excentrée par rapport à une extension longitudinale (L) de l'appareil de coupe (1).

8. Appareil de coupe selon l'une des revendications 6 ou 7, **caractérisé en ce que**, pour le remplacement du porte-couteau (33), le porte-couteau (33) est disposé dans la partie de coque (4) de manière mobile dans la direction de l'axe de pivotement (x) et/ou **en ce que** plusieurs logements de guidage (41, 42) sont prévus pour le porte-couteau (33), pour la disposition différente en hauteur du porte-couteau (33) dans la partie de coque (4).

9. Appareil de coupe selon l'une des revendications 6 à 8, **caractérisé en ce que** le porte-couteau (33) peut être fixé dans la première partie de coque (4) au moyen d'une vis (39), un logement (40) pour la vis (39) s'étendant, de préférence, dans le porte-couteau (33) transversalement à une direction de déplacement (f) du porte-couteau (33).

10. Appareil de coupe (1) selon l'une des revendications précédentes, **caractérisé en ce que** la deuxième partie de coque (5) présente le logement de coque (9) en forme de V et **en ce qu'**un angle d'ouverture (α) du deuxième logement de coque (9) en V est compris entre 80 et 100 degrés.

11. Appareil de coupe selon l'une des revendications précédentes, **caractérisé en ce que**, à l'exception d'une lame de coupe (26), le premier logement de coque (8) de la première partie de coque (4) est formé en forme de section circulaire comme une forme de section circulaire.

12. Appareil de coupe selon la revendication 11, **caractérisé en ce que** la forme de section circulaire est interrompue par la lame de coupe (26) faisant saillie par rapport au premier logement de coque (8) et **en ce qu'**une zone de saillie (30) de la lame de coupe (26) est formée comme une zone de saillie en forme d'angle.

13. Appareil de coupe selon la revendication 12, **caractérisé en ce que** la zone de sortie (30) en forme d'angle de la lame de coupe (26) est formée par une branche courte (31) et une branche longue (32).

14. Appareil de coupe selon l'une des revendications 10 à 13, **caractérisé en ce qu'**une branche en V (15) du deuxième logement de coque (9) se transforme à son extrémité en une courbure (23) tournée vers l'intérieur.

15. Appareil de coupe selon la revendication 14, **caractérisé en ce que** la courbure (23) est formée en forme de segment de cercle.
